# EUROPÄISCHE PATENTSCHRIFT

(11) **EP 1 671 084 B1**
(45) Veröffentlichungstag und Bekanntmachung des Hinweises auf die Patenterteilung: **15.11.2017**
(21) Anmeldenummer: 04787100.9
(22) Anmeldetag: 03.09.2004
(51) Int. Cl.: G01F 1/684

(54) **LEITERPLATTE MIT KUNSTSTOFFTEIL ZUR AUFNAHME EINER MESSEINRICHTUNG**
PRINTED CIRCUIT BOARD WITH A PLASTIC PART FOR RECEIVING A MEASURING DEVICE
CARTE DE CIRCUITS COMPORTANT UN ELEMENT EN MATIERE PLASTIQUE SERVANT A RECEVOIR UN DISPOSITIF DE MESURE

(30) Priorität: 29.09.2003 DE 10345584
(43) Veröffentlichungstag der Anmeldung: 21.06.2006
(73) Patentinhaber: ROBERT BOSCH GMBH, 70442 Stuttgart (DE)
(72) Erfinder: STROHRMANN, Manfred, 76137 Karlsruhe (DE); SCHARD, Rainer, 73730 Esslingen (DE)
(86) Internationale Anmeldenummer: PCT/EP2004/052038
(87) Internationale Veröffentlichungsnummer: WO 2005/031280

(56) Entgegenhaltungen:
- US-A- 4 517 837
- US-A- 5 396 795
- US-A- 5 744 713
- US-A1- 2002 050 165
- US-A1- 2002 064 649
- US-B1- 6 516 785

## Beschreibung

### Technisches Gebiet

Zur Ermittlung des Luftdurchsatzes im Ansaug- bzw. Ladetrakt einer Verbrennungskraftmaschine kommen Durchflussmesser zum Einsatz. Da es bei dem chemischen Vorgang der Verbrennung auf die Massenverhältnisse ankommt, ist der Massendurchfluss der Ansaug-/Ladeluft zu messen, wofür zum Teil auch volumen- oder staudruckmessende Verfahren zur Anwendung kommen. Der maximal zu messende Luftmassenstrom liegt je nach Motorleistung im Bereich zwischen 400 bis 1000 kg/h.

### Stand der Technik

Aus dem Kraftfahrtechnischen Taschenbuch, 23. aktualisierte und erweiterte Auflage, Braunschweig, Wiesbaden, Viehweg 1999, ISBN 3-528-03876-4, Seiten 116 und 117 sind nach dem thermischen Prinzip arbeitende mikromechanische Heißfilm-Luftmassen-Durchflussmesser kleinster Abmessungen bekannt. Bei diesen sind Heiz- und Messwiderstände als dünne Pt-Schichten auf einem Siliciumchip als Träger aufgesputtert, d.h. aufgedampft. Der Siliciumchip ist im Bereich des Heizwiderstandes zur thermischen Entkopplung von seiner Halterung auf einem mikromechanisch ausgedünnten Bereich des Trägers ähnlich einer Drucksensormembran untergebracht. Der Heizwiderstand wird durch den eng benachbart aufgenommenen Heiztemperatursensor sowie dem Lufttemperatursensor auf eine konstante Übertemperatur geregelt. Der Lufttemperatursensor befindet sich innerhalb eines verdickten Randbereiches des Siliciumchips. Im Gegensatz zu anderen Techniken wird bei einem mikromechanischen Heißfilm-Luftmassen-Durchflussmesser nicht der Heizstrom als Ausgangssignal genutzt, sondern die von zwei Temperatursensoren festgestellte Temperaturdifferenz des Messmediums, im Falle von Luftmassenmessern der Luft. Einer der Temperatursensoren ist vor und einer hinter dem Heizwiderstand in Strömungsrichtung der Luft gesehen angeordnet. Im Gegensatz zum Heizstrom gibt diese Ausgangsgröße den Durchfluss Vorzeichenrichtig wieder, wenn auch in ebenfalls nicht-linearer Weise. Solche Durchflussmesser sind z. B. aus Dokument US 2002/0050165 A1 oder aus Dokument US 5,396,795 bekannt. Heißfilm-Luftmassenmesser mit Erkennung der Strömungsrichtung bei pulsierender Strömung sind für die Lasterfassung bei Verbrennungsmotoren mit Benzin- und Diesel-Kraftstoffeinspritzung konzipiert. Der Einbau in das Luftansaugsystem erfolgt in der Regel zwischen dem Luftfilter und einer Drosselvorrichtung als vormontierte Baugruppe mit Steckfühler und Messgehäuse. Bei Heißfilm-Luftmassensensoren handelt es sich um thermische Durchflussmesser. Das Sensorelement mit seinen Temperaturfühlern und dem Heizbereich ist in einem Anströmblech montiert. Durch einen Messkanal am Steckfühlergehäuse wird ein Teilluftstrom aus dem Messrohr an einem Sensorelement vorbeigeführt. Stromab des Messkanals ist ein zweiteiliges Strömungsgitter aus Kunststoff und Edelstahl vorgesehen. Über eine Kalibrierung des Heißfilm-Luftmassenmessers erfolgt eine Zuordnung zur gesamten im Rohr strömenden Luftmasse.
Es hat sich herausgestellt, dass die bisher eingesetzten mikromechanischen Heißfilm-Luftmassenmesser in Fahrzeugdauerläufen sowohl im Einsatz bei Otto- als auch bei Dieselmotoren teilweise deutliche Kennliniendriften aufwiesen. Dies rührt aus einer Unterströmung des Sensorchips her. Ist der Fügespalt aufgrund von Fertigungstoleranzen zwischen dem Anström- oder Montageblech zu groß, fließt ein Anteil des Teilluftmassenstromes auf der Rückseite des Bleches entlang. Durch eine Verschmutzung wird die Spaltbreite des Fügespaltes verändert, so dass sich bei einer Verschmutzung die Kennlinie des Sensorchips ändert.
Eine weitere Ursache für die Kennliniendrift liegt in der Korrosion des Anströmbleches. Korrosionsprodukte, die sich auf dem Anströmblech bilden, führen zu einer veränderten Anströmung des Sensorchips und damit zu einer Drift von dessen Kennlinie.
Eine weitere Ursache für die Kennliniendrift liegt im Auslaufen von Sensorgel. Das Anströmblech besteht heute in der Regel aus einem gefalzten Blech. Durch den Falzspalt gelangt aus einem benachbarten Hybridraum Sensorgel in die Nähe des Sensorchips. Unter Hybridraum ist ein Schaltungsträger zu verstehen, auf welchem die gesamte Elektronik aufgebracht ist. Dieser Hybridraum ist mit Silikongel gefüllt, um die integrierten Schaltkreise und die zugehörigen Bondverbindungen gegen Umwelteinflüsse zu schützen. Das Sensorgel wirkt als Haftvermittler für Schmutz. Aus dem Hybridraum ausgetretenes Sensorgel und sich daran ablagernde Schmutzpartikel führen zu einer Änderung des Temperaturhaushaltes in der Membran des Sensors und führen somit zu einer Drift der Sensorkennlinie.

### Darstellung der Erfindung

Mit der erfindungsgemäß vorgeschlagenen Lösung lässt sich ein Unterströmen des Sensorchips und das Ausbluten von Sensorgel vermeiden, da durch die erfindungsgemäß vorgeschlagene Sensoraufnahme ein Dichtkleben zwischen dem Hybridraum und einem Bypass-kanal ermöglicht wird. Durch den Einsatz moderner Kunststoffe kann eine Einengung heute üblicherweise vorliegender Toleranzen erzielt werden. Dies wiederum gestattet ein präziseres Setzen, d.h. ein genaueres Plazieren des Sensorchips in den bereits aufgebrachten Kleber für das Sensorelement. Daraus ergibt sich wiederum eine Reduzierung des Ausschusses in der Serienfertigung. Ferner kann durch den Einsatz von Kunststoff bei der Herstellung der Sensoraufnahme eine gezielte aerodynamische Gestaltung leichter umgesetzt werden.

Im Vergleich zu einem Blech bzw. einem gefalzten Blech weist ein Kunststoffbauteil einen wesentlich geringeren Temperaturhub auf. Die Temperatur der Blechzunge im Vergleich zur Temperatur eines Bleches, aufgetragen über die Zeit, verdeutlicht, dass die Temperatur des Bleches etwas höher liegt als diejenige der Blechzunge. Aus diesem Grunde wird beim Aufbringen des Sensorchips direkt auf den Kunststoff eine thermische Entkopplung des Sensorchips von dem starken Temperaturänderungen unterworfenen Anströmblech erreicht.

Die Aufnahme des Sensorchips wird von der Blechunterlage oder der Leiterplatte getrennt.

Einerseits kann das Kunststoffteil, d.h. eine Kunststoffzunge zur Aufnahme des Sensorchips separat gespritzt werden und anschließend mit der Leiterplatte verklemmt, verklebt, verschweißt oder auf einem anderen Wege gefügt werden.

Andererseits lässt sich die Leiterplatte mit einer Blechplatte direkt in einem Prozess herstellen (Heat-Sink-Technologie). Eine SBU-Heat-Sink-Leiterplatte lässt sich als Dickfilmersatz einsetzen. Eine gemäß der Heat-Sink-Technologie gefertigte Leiterplatte, d.h. eine SBU-Leiterplatte (Sequential-Built-Up) stellt eine mehrlagig ausgebildete Leiterplatte dar. Diese kann als Schaltungsträger mit Keramiksubstrat eingesetzt werden. Die SBU-Heat-Sink-Leiterplatte kann als doppelseitig strukturierte Leiterplatte mit Microvias und chemisch galvanisierter Kupferschicht ausgebildet werden. Solche SBU-Heat-Sink-Leiterplatten werden später mit der Aufnahme aus Kunststoff für den Sensorchip verklemmt, verklebt, verschweißt oder auf einem anderen Wege gefügt. Die letztgenannte Alternative zeichnet sich durch günstige Herstellkosten aus, da die Leiterplattenstruktur unmittelbar mit einem metallischen Körper zur Wärmeabfuhr verbunden hergestellt wird. Daher kann ein separates Blechteil entfallen. In Verbindung mit einer separat gespritzten Kunststoffzunge als Aufnahme für den Sensorchip stellt dies ein kostengünstiges Aufbaukonzept dar; die Leiterplatte wird gemeinsam mit dem metallischen Substrat hergestellt, strukturiert und anschließend mit elektronischen Bauelementen bestückt. Der Nutzen wird durch ein Auseinanderschneiden des Großsubstrates erzeugt. Eine weitere Qualitätssteigerung lässt sich dadurch erreichen, dass die Aufnahmelasche für einen Sensorchip an einem Heißfilm-Luftmassenmesser durch eine aus Kunststoff gespritzte Chipkarte ersetzt wird. Die Verwendung von Kunststoff als Werkstoff für die Herstellung der Sensorauflage bietet zahlreiche Vorteile gegenüber einer aus Blech geprägten Sensorkaverne, da sich der Kunststoff leichter konturieren lässt und somit filigraner Formen erzielbar sind. Durch eine mögliche Einengung der Toleranzen lässt sich eine präzisere Aufnahme des Sensorchips in einer Sensorkaverne erreichen.

### Zeichnung

Anhand der Zeichnung wird die Erfindung nachstehend eingehender beschrieben.

Es zeigt:
- Figur 1: Einen Heißfilm-Luftmassen-Durchflussmesser in erheblich vergrößerter Darstellung,
- Figur 2: eine Draufsicht der Kunststoffzunge eines Heißfilm-Luftmassen-Durchflussmessers gemäß der vorliegenden Erfindung,
- Figur 3: einen Schnitt gemäß III-III in Fig. 2 durch einen Heißfilm-Luftmassen-Durchflussmesser,
- Figur 4: ein Detail der Anströmkante einer Kunststofflasche, an welcher ein Sensorchip aufgenommen ist,
- Figur 5: Sensorchipaufnahmegehäuse mit einem abgewinkelten Stecker, eine Leiterplatte mit angespritzter Kunststofflasche, ein Hybridraumdeckel sowie ein Sensoraufnahmedeckel,
- Figur 5.1: eine vergrößerte Darstellung der Leiterplatte mit in eine Kunststoffzunge eingelassenem Sensorchip,
- Figur 5.2: eine in vergrößertem Maßstab wiedergegebene Darstellung der Kunststofflasche mit integriertem Sensorchip,
- Figur 6: eine Leiterplatte mit darauf bestückten Elektronikkomponenten und
- Figur 7: eine Gesamtdarstellung eines Heißfilm-Luftmassensensors.

### Ausführungsvarianten

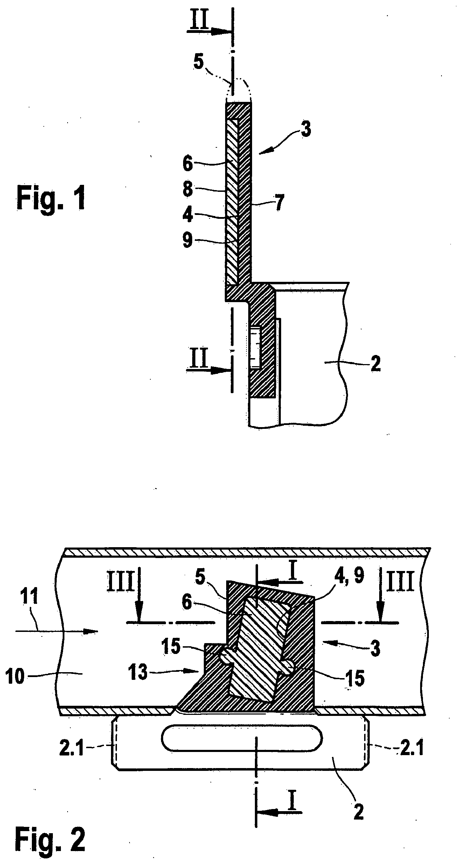

Figur 1 ist in erheblich vergrößertem Maßstab eine Kunststoffzunge zur Aufnahme eines Sensorchips entnehmbar. An ein Elektronikmodul 2 ist seitlich eine Kunststoffträgerzunge 3 angespritzt. Die Kunststoffträgerzunge umfasst eine Ausnehmung 4 mit einer ebenen Bodenfläche, in welche ein Sensorchip 6 eingelassen werden kann. Die Kunststoffträgerzunge 3 gemäß der Darstellung in Figur 1 ragt in einen in Figur 1 nicht dargestellten Bypass-Kanal, der von einem strömenden Medium durchströmt wird. Das strömende Medium überstreicht die Kunststoffträgerzunge 3 sowohl auf der Seite 8, an der der Sensorchip 6 aufgenommen ist als auch auf der Rückseite 7. Die Ausnehmung 4 innerhalb der Kunststoffträgerzunge 3 ist als Kaverne 9 beschaffen und umschließt den Sensorchip 6 allseitig. An der Kunststoffträgerzunge 3 ist eine Anströmkante 5 ausgebildet, die gemäß der Darstellung in Figur 1 als Rundung ausgebildet werden kann. Der in die als Kaverne 9 beschaffene Ausnehmung 4 einlaßbare Sensorchip 6 wird bevorzugt in einer Höhe ausgebildet, die der Tiefe der in der Kunststoffträgerzunge 3 eingelassenen Ausnehmung 4 entspricht, so dass der die Anströmkante 5 der Kunststoffträgerzunge 3 passierende Strom des strömenden Mediums die Vorderseite 8 der Kunststoffträgerzunge 3 plan passiert, ohne dass Verwirbelungen in der Strömung induziert werden.

Der Darstellung gemäß Figur 2 ist eine Draufsicht der in Figur 1 im Schnitt dargestellten Kunststoffträgerzunge zu entnehmen. Die Kunststoffträgerzunge 3 wird mit Befestigungsstiften derart in einem als Elektronikmodul 2 beschaffenen Gerätegehäuse fixiert, dass die Kunststoffträgerzunge 3 in einen Bypass-Kanal 10 - wie in Figur 2 schematisch angedeutet - hineinragt. Eine in Anströmrichtung 11 den Bypass-Kanal 10 passierende Strömung strömt die in aerodynamischer Kontur 13 ausgebildete Anströmkante 5 der Kunststoffträgerzunge 3 an. Der Sensorchip 6 ist beispielsweise durch eine Verklebung in der als Kaverne 9 ausgelegten Ausnehmung 4 der Kunststoffträgerzunge 3 befestigt. Im als Elektronikmodul 2 ausgebildetem Gerätegehäuse kann zur verbesserten Aufnahme einer Leiterplatte eine Öffnung vorgesehen sein, in welche Klebstoff eingebracht wird, um eine Leiterplatte fest am Elektronikmodul 2 zu installieren.

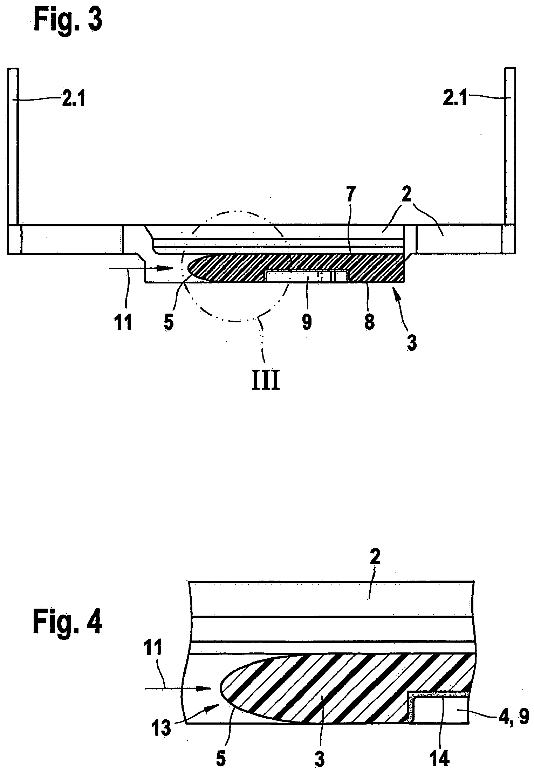

Figur 3 zeigt eine Darstellung der Kunststoffträgerzunge gemäß des Schnittverlaufes III-III in Figur 2.

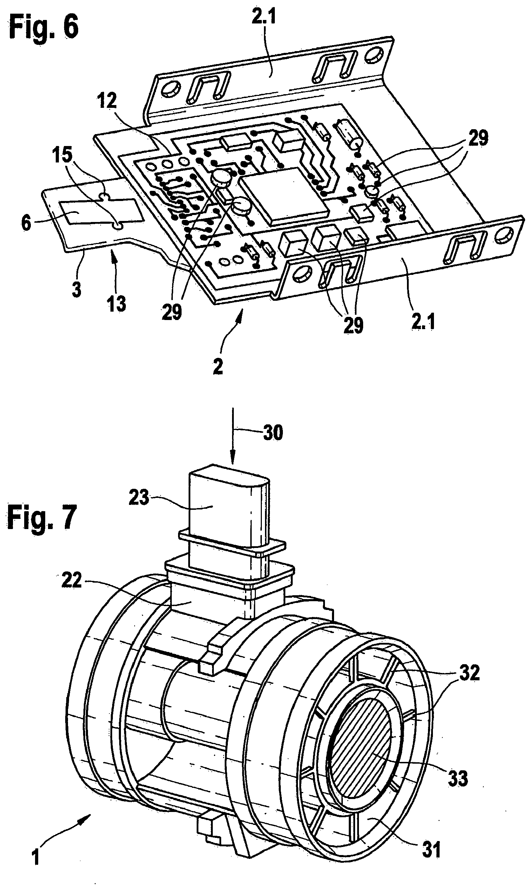

Die Kunststoffträgerzunge 3 gemäß der Darstellung in Figur 3 ist teilweise geschnitten dargestellt. In die als Kaverne 9 ausgebildete Ausnehmung 4 der Kunststoffträgerzunge 3 ist der Sensorchip 6 eingelassen.
In die als Kaverne 9 ausgebildete Ausnehmung der Kunststoffträgerzunge 3 ist der Sensorchip 6 eingelassen. Am Sensorchip 6 sind seitlich Klebeohren 15 ausgebildet, welche in zu diesen korrespondierenden Ausnehmungen der Kunststoffträgerzunge 3 eingreifen. An der Bodenfläche der als Kaverne 9 ausgebildeten Ausnehmung 4 in der Kunststoffträgerzunge 3 wird eine Kleberschicht aufgebracht, um den Sensorchip 6 mit der Kunststoffträgerzunge 3 zu verbinden. Am Elektronikmodul 2 (Blechteil) sind Seitenstege 2.1 ausgebildet.
Die einen in Figur 3 nicht dargestellten Bypass-Kanal durchströmende Strömung eines gasförmigen Mediums strömt die Anströmkante der Kunststoffträgerzunge 3 in Anströmrichtung 11 an. Der in Figur 3 mit einem Kreis bezeichnete Ausschnitt ist in der Darstellung gemäß Figur 4 in vergrößertem Maßstab wiedergegeben. Aus der Darstellung gemäß Figur 4 geht hervor, dass die Anströmkante 5 in einer aerodynamischen Kontur 13 beschaffen ist. Die Anströmkante 5 kann gerundet ausgebildet werden, kegelstumpfförmig oder auch eine annähernd elliptische Kontur aufweisen. In Anströmrichtung 11 gesehen, ist eine kavernenförmige Ausnehmung 4 in der Kunststoffträgerzunge 3 ausgebildet. In die kavernenförmig beschaffene Ausnehmung 4 wird eine Klebeschicht 14 eingebracht, mit welcher der in Figur 4 nicht dargestellte Sensorchip in die Kaverne 9 eingelassen wird. Die Dicke der Klebeschicht 14 ist so bemessen, dass der in der Kaverne 9 eingeklebte Sensorchip 6 nicht über die Unterkante der Kunststoffträgerzunge 3 hervorsteht, d.h. dass die Strömung des gasförmigen Mediums die Kunststoffträgerzunge 3 annähernd verwirbelungsfrei passieren kann.

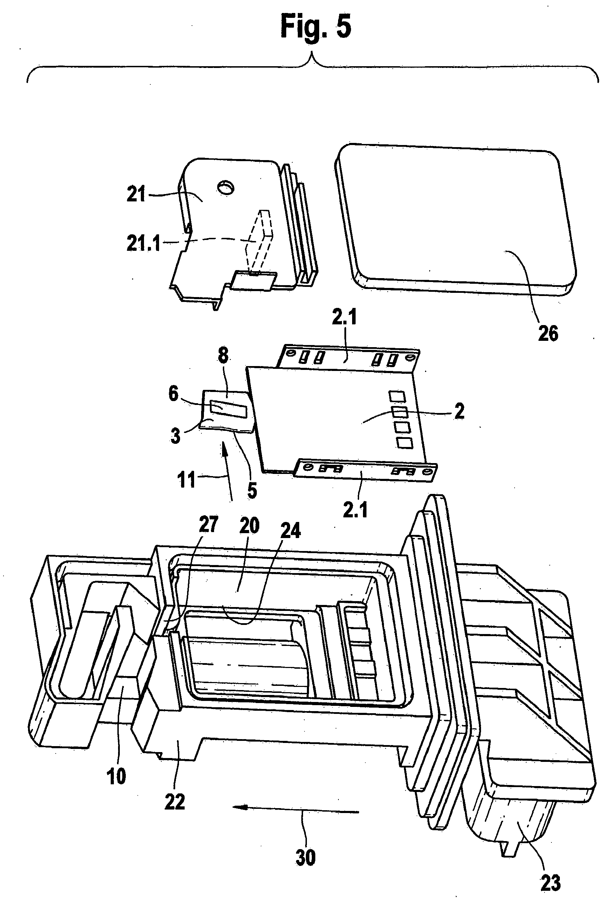

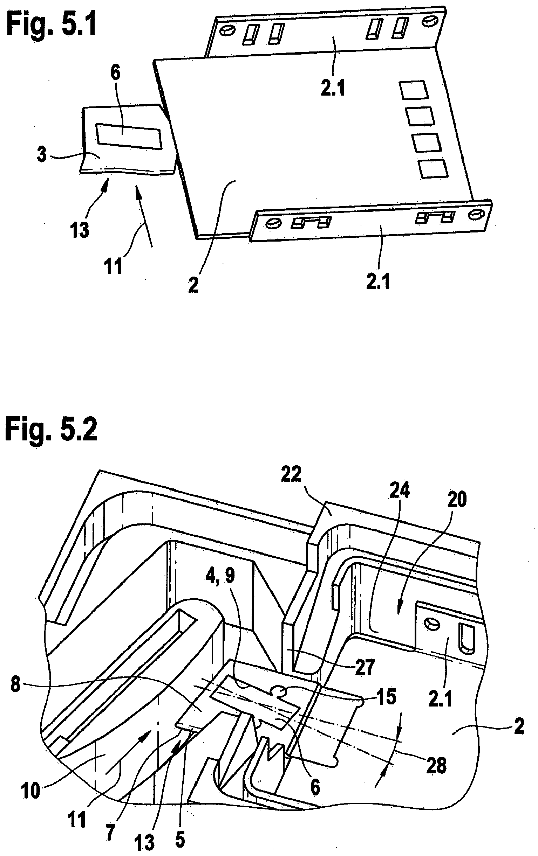

Figur 5 zeigt die Komponenten eines Heißfilm-Luftmassen-Durchflussmessers, ein Steckergehäuse, ein Elektronikmodul, einen Hybridraum und einen Kavernendeckel umfassend.
An einem bevorzugt aus Kunststoffspritzgießbauteil gefertigten Gehäuse 22 ist ein in der Darstellung gemäß Figur 7 gewinkelt angeordneter Stecker 23 ausgebildet. Zur Verrastung an einem Strömungsrohr weist das Steckergehäuse 22 eine gestuft ausgebildete Fläche auf. Im Steckergehäuse 22 ist eine Auflagefläche 24 ausgebildet, in welche das Elektronikmodul 2 eingelassen werden kann. Im Steckergehäuse 22 ist ferner der Bypass-Kanal 10 ausgebildet, der durch eine Wandung von einem Hybridraum 20 getrennt ist. In einer den Hybridraum 20 begrenzenden Wandung ist ein Durchbruch 27 vorgesehen, der von der Kunststoffträgerzunge 3 durchsetzt wird. Dieser Durchbruch 27 wird beim Aufsetzen eines Hybridraum/Bypass-Kanaldeckels 21 durch eine an diesem ausgebildete Zunge 21.1 verschlossen. Die Zunge 21.1 kann an ihrer der Kunststoffträgerzunge 3 zuweisenden Seite mit Klebstoff versehen werden, so dass eine Dichtklebung zwischen dem Bypass-Kanal 10 und dem Hybridraum 20 des Steckergehäuses 22 erreicht wird.
Im Steckergehäuse 22 ist eine Auflagefläche 24 ausgebildet, in welche das Elektronikmodul 2 eingelassen wird. Die Seitenstege 2.1 des Elektronikmoduls 2 liegen an den Wandungen der Auflagefläche 24 an. In einer Wandung des Steckergehäuses 22, welches das Elektronikmodul 2 umgibt, ist ein Durchbruch 27 vorgesehen. Durch den Durchbruch 27 erstreckt sich die Kunststoffträgerzunge 3, in welcher der Sensorchip 6 eingelassen ist. Das strömende Medium durchströmt den Bypasskanal 10 in Ansteuerrichtung 11, so dass das strömende Medium sowohl die Vorderseite 8 als auch die Rückseite 9 der Kunststoffträgerzunge 3 überstreicht.
Am Steckergehäuse 22, auf dessen Auflagefläche 24 das Elektronikmodul 2 eingesetzt wird, umfasst einen optional gewinkelt ausgebildeten Steckeranschluss 23. Der Steckeranschluss 23 steht über nicht näher dargestellte Kontakte mit dem Elektronikmodul 2 in Verbindung.
Aus der Darstellung gemäß Figur 5.1 geht das Elektronikmodul näher hervor.
An der dem Bypasskanal 10 zuweisenden Seite des Elektronikmoduls 2 ist die Kunststoffträgerzunge 3 ausgebildet, in welcher der Sensorchip 6 eingelassen ist. Der Orientierungswinkel, in welchem der Sensorchip 6 relativ zur Kunststoffträgerzunge 3 angeordnet ist, entspricht dem Winkel, unter dem der Bypasskanal 10 innerhalb des Steckergehäuses 22 verläuft. Der Sensorchip 6 ist derart in die Kunststoffträgerzunge 3 eingelassen, dass dieser orthogonal zur Anströmrichtung 11 im Bypass-Kanal 10 angeordnet ist.
Auf der Bodenplatte des Elektronikmoduls 2 befinden sich an dem der Kunststoffträgerzunge 3 gegenüberliegenden Ende Kontaktpads, an denen die Kontakte des Steckers 23 angeschlossen werden. Der Vollständigkeit halber sei erwähnt, dass ein fertig montiertes Steckergehäuse 22 mit integriertem Elektronikmodul 2 montierten Hybridraum-/Bypasskanaldeckel 21 und montiertem Kavernendeckel 26 in Richtung des Montagepfeiles 30 in ein Strömungsrohr 31 integriert werden kann. Das Strömungsrohr 31 geht aus Figur 7 hervor.
Figur 5.2 zeigt die Durchbruchsstelle im Steckergehäuse und die in den Bypasskanal hineinragende Kunststoffträgerzunge in vergrößerter Ansicht.

Die Seitenstege 2.1 des Elektronikmoduls 2 liegen an den Wänden des Steckergehäuses 22 an, welche die Auflagefläche 24 für das Elektronikmodul 2 umschließen. Die an die Bodenplatte des Elektronikmoduls 2 direkt anspritzbare Kunststoffzunge 3 oder als separates Bauteil an dieser befestigbare Kunststoffzunge 3 ragt in den Bypasskanal 10 des Steckergehäuses hinein. Der Bypasskanal 10 ist durch eine Wandung, die im Steckergehäuse 22 ausgebildet ist, vom Hybridraum 20 getrennt.

Der Winkel, unter welchem der Sensorchip 6 an der Vorderseite 8 der Kunststoffträgerzunge 3 orientiert ist, ist durch Bezugszeichen 28 gekennzeichnet und entspricht dem Winkel, unter welchem der Bypasskanal 10 im Steckergehäuse 22 geneigt verläuft. Der Sensorchip 3 ist mittels Klebeohren 15 in der Kunststoffträgerzunge 3 fixiert. Der Durchbruch 27 im Steckergehäuse 22 ist so bemessen, dass die Kunststoffträgerzunge 3 diesen mit ihrer Breite komplett ausfüllt. Das in den Bypasskanal 10 einströmende, gasförmige Medium strömt die Anströmkante 5 der Kunststoffträgerzunge 3 an, welche in einer aerodynamischen Kontur 13 ausgebildet ist.

Figur 6 ist eine Leiterplatte entnehmbar, die auf der Bodenfläche des Elektronikmoduls befestigt ist.

Die Leiterplatte 12, welche mit Elektronik-Komponenten 29 sowie Leiterbahnen versehen ist, kann auf die Bodenplatte des Elektronikmoduls 2 aufgeklebt oder auch auf andere Weise, zum Beispiel durch Verstiftung, befestigt werden. Das Verstiften von Leiterplatte 12 mit der Bodenplatte des Elektronikmoduls 2 kann durch verrastbare Stifte erfolgen, mit welchen die Leiterplatte 12 beispielsweise an ihren Eckpunkten mit der Bodenplatte des als metallisches U-Profil ausgebildeten Elektronikmoduls 2 verbunden wird.

Die in Figur 6 dargestellte Kunststoffträgerzunge 3, welche der Aufnahme des Sensorchip 6 dient, kann entweder separat gespritzt werden und anschließend mit der Leiterplatte 12 verklemmt, verklebt oder verschweißt werden.

Alternativ besteht die Möglichkeit, die Leiterplatte 12 mit einer Blechplatte direkt in einem Prozess herzustellen (Heat-Sink-Technologie (SBU)). Ein gemäß des SBU-Heat-Sink-Verfahrens hergestellte Leiterplatte 12 umfasst eine doppelseitig strukturierte SBU-Heat-Sink-Leiterplatte mit Microvias und chemisch galvanischer Kupferschicht. Diese Heat-Sink-Leiterplatte wird später mit der Kunststoffträgerzunge 3 zur Aufnahme des Sensorchips 6 verklemmt, verklebt oder gemäß eines anderen Fügeverfahrens stoffschlüssig verbunden. Die Ausbildung der Leiterplatte 12 in Heat-Sink-Technologie ist einerseits wesentlich kostengünstiger als der Einsatz eines Hybrides, da die Leiterplattenstruktur mit einem Wärmeabfuhrmetall verbunden hergestellt wird. In Verbindung mit einer separat gespritzten Kunststoffträgerzunge 3 zur Aufnahme des Sensorchips 6 stellt dies ein sehr kostengünstiges elektronisches Aufbaukonzept dar. Die Blechplatte wird zunächst gestanzt; anschließend werden die Teile auf einem Druckkompensationsträger 16 geschichtet und miteinander verpresst. Die Leiterplatte 12 kann mittels eines Standardprozesses strukturiert werden. Anschließend lässt sich die Kunststoffträgerzunge 3 direkt an der Leiterplatte 12 montieren.
Alternativ ist es möglich, die Kunststoffträgerzunge 3 direkt mit einer als Kaverne 9 dienenden Aufnahme 4 herzustellen. Der Einsatz von Kunststoff als Werkstoff für die Herstellung der Kunststoffträgerzunge bietet zahlreiche Vorteile gegenüber einer aus Blech geprägten Sensorkaverne. Zum einen lässt sich Kunststoff viel leichter konturieren und somit filigranere Formen herstellen. Eine dadurch mögliche Einengung der Fertigungstoleranzen ermöglicht ein präziseres Aufsetzen des Sensorchips in die als Kaverne 9 dienende Ausnehmung 4 der Kunststoffträgerzunge 3.
Durch die beliebigen Formgebungsmöglichkeiten des Kunststoffs lassen sich aerodynamische Forderungen hinsichtlich des Ausbildens der Anströmkante 5 der Kunststoffträgerzunge realisieren, die aus konstruktiven und fertigungstechnischen Gründen bisher nicht berücksichtigt werden konnten. Ein bisher eingesetztes Bodenblech, welches auf einem zusätzlichen teuren Galvanikweg herzustellen war, und durch Aufbringung einer NiNiP-Schicht als Korrosionsschutz eingesetzt wurde, kann künftig entfallen. Der Sensorchip 6 kann orthogonal zur Anströmrichtung 11 gedreht werden, so dass eine zweite Schwertklebung im hinteren Bereich des Bypasskanals 10 entfallen kann. Nach dem Kunststoffspritzgießen kann das fertige Teil direkt in Transportfolien verpackt werden; eine Behandlung als Schüttgut und damit einhergehender Beschädigungen sowie kennlinienwirksame Verbiegungen der Kunststoffträgerzunge können entfallen.
Als Auflagefläche des Sensorchips 6 dient eine ebene Kunststoffauflage, d.h. der Boden der als Kaverne 9 dienenden Ausnehmung 4. Die seitlich am Sensorchip 6 angebrachten Klebeohren 15 ermöglichen eine vollständige Dichtklebung im Bereich zwischen dem Bypasskanal 11 und dem Elektronikraum. Zwischen der Unterseite der Zunge 2.1 und der Oberseite der Kunststoffträgerzunge, in welche der Sensorchip 6 eingelassen ist, wird eine Klebschicht aufgebracht, so dass der Bypass-Kanal 10 und der Hybridraum 20 gegeneinander abgedichtet sind.
Durch die erfindungsgemäß vorgeschlagene Aufnahme des Sensorchips 6 innerhalb einer als Kaverne 9 fungierenden Ausnehmung 4 der Kunststoffträgerzunge 3 wird bewirkt, dass kein Gel auf den Sensorchip 6 gelangt und somit die Funktionstoleranz für die Lebensdauer verbessert werden kann. Weiterhin wird durch die Vermeidung von Unterströmungen des Sensorchips 6 durch eine zuströmseitige Dichtung (direkte Beeinflussung der Membranunterseite oder Grenzschichtabsaugeeffekt), Kennlinienstreuung deutlich reduziert. Ein nicht vom strömenden Medium unterströmter Sensorchip 6 ist unempfindlich gegenüber seiner Lage innerhalb der Ausnehmung 4, die als Kaverne 9 dient und zeigt eine geringere Drift über die Lebensdauer. Die Ausbildung der Anströmkante 5 in einer aerodynamisch günstigen Kontur 13 kann den Einsatzerfordernissen entsprechend variiert werden und gezielt aerodynamisch angepasst werden.

Aus Figur 7 geht ein Heißfilm-Luftmassen-Durchflussmesser 1 näher hervor, der in Montagerichtung 30 in ein Strömungsrohr 31 integriert ist. Dazu ist das Steckergehäuse 22 mit dem Stecker 23 vollständig in das Strömungsrohr 31 eingeschoben. Im Strömungsrohr 31 befinden sich Einbauten, wie beispielsweise der das strömende Medium gleichrichtende Gleichrichter 32 sowie ein etwa zentrisch angeordnetes Abweisgitter 33.

### Bezugszeichenliste

- 1: Heißfilm-Luftmassen-Durchflussmesser
- 2: Elekronikmodul
- 2.1: Seitensteg
- 3: Kunststoffträgerzunge
- 4: Ausnehmung
- 5: Anströmkante
- 6: Sensorchip
- 7: Unterseite
- 8: Oberseite
- 9: Kaverne
- 10: Bypass-Kanal
- 11: Anströmrichtung
- 12: Leiterplatte
- 13: Aerodynamische Kontur
- 14: Klebeschicht
- 15: Klebeohr
- 16: Druckkompensationsträger
- 17: erste Packungsdicke
- 18: zweite Packungsdicke
- 19: Sensoraufnahme
- 20: Hybridraum
- 21: Hybridraumdeckel
- 22: Gehäuse
- 23: Stecker
- 24: Auflagefläche
- 25: Schwertklebung
- 26: Kavernendeckel
- 27: Durchbruch
- 28: Einbauwinkel
- 29: Elektronik-Komponenten
- 30: Montagerichtung
- 31: Strömungsrohr
- 32: Gleichrichter
- 33: Abweisgitter

## Patentansprüche

1. Heißfilm-Luftmassen-Durchflussmesser zur Erfassung des Luftdurchflusses im Ansaug- oder Lädelufttrakt einer Verbrennungskraftmaschine, mit einem Steckergehäuse (22), einem Elektronikmodul (2) und mit einem einen Sensorchip (6) aufnehmende Trägerteil (3), welches in einen im Steckergehäuse (22) ausgebildeten Kanal (10), der zumindest von einem Teilmassenstrom eines strömenden Mediums durchströmt wird, zugeordnet ist, wobei der Sensorchip (6) in den von dem Teilmassenstrom des strömenden Mediums durchströmten Kanal (10) hineinragt, **dadurch gekennzeichnet, dass** das Trägerteil (3), in welchem der Sensorchip (6) stromab in Bezug auf eine Anströmrichtung (11) hinter einer Anströmkante (5) liegend integriert ist, entweder als separat an das Elektronikmodul (2) befestigbares Bauelement oder als eine an das Elektronikmodul (2) angespritzte Einheit ausgebildet ist, wobei der Sensorchip (6) in eine diesen allscitig begrenzende, als Kaverne (9) dienende Ausnehmung (4) an einer umströmen Seite des Trägerteils (3) aufgenommen ist und der Boden der als Kaverne (9) dienenden Ausnehmung (4) im Trägerteil (3) eben ist, wobei das Trägerteil (3) aus Kunststoff hergestellt ist.

2. Heißfilm-Luftmassen-Durchflussmesser gemäß Anspruch 1, **dadurch gekennzeichnet, dass** die Oberseite des Sensorchips (6) mit einer Seite (7, 8) des Trägerteils (3) eine plan verIaufende Fläche bildet.

3. Heißfilm-Luftmassen-Durchflussmesser gemäß Anspruch 1, **dadurch gekennzeichnet, dass** das Elektronikmodul (2) auf einer Auflagerfläche (24) des Steckergehäuses (22) aufliegt, welches einen dem Bypasskanal (10) zuweisenden Durchbruch (27) aufweist.

4. Heißfilm-Luftmassen-Durchflussmesser gemäß Anspruch 1, **dadurch gekennzeichnet, dass** im als U-Profil ausgebildeten Elektronikmodul (2) eine Leiterplatte (12) verstiftet oder verklebt aufgenommen ist.

5. Heißfilm-Luftmassen-Durchflussmesser gemäß Anspruch 1, **dadurch gekennzeichnet, dass** der Sensorchip (6) innerhalb der Ausnehmung 4 durch Klebeohren (15) fixiert ist.

6. Verfahren zur Herstellung eines Elektronikmoduls (2) für einen Heißfilm-Luftmassen-Durchflussmesser zur Erfassung des Luftdurchflusses im Ansaug- oder Ladelufttrakt einer Verbrennungskraftmaschine, mit einer Leiterplatte (12) und einem Trägerteil (3), das einen Sensorchip (6) zur Erfassung der Strömung eides in einem Kanal (11) strömenden Mediums aufnimmt, mit nachfolgenden Verfahrensschritten:
a) dem Stanzen eines als Elektronikmoduls (2) dienenden Blechteils (2)
b) dem Erzeugen von Leiterbahnen auf der Leiterplatte (12),
c) dem Befestigen der Leiterplatte (12) an dem Elektronikmoduls (2),
d) der Montage des den Sensorchip (6) aufnehmenden Trägerteils (3), das aus Kunststoff hergestellt ist, an der Leiterplatte (12) entweder als separat an dem Elektronikmodul (2) befestigtes Bauteil oder als angespritzte Einheit,
e) dem Bestücken des Trägerteils (3) mit dem Sensorchip (6), wobei der Sensorchip (6) in eine diesen allseitig begrenzende, als Kaverne (9) dienenden Ausnehmung (4) an einer umströmten Seite des Trägerteil (3) aufgenommen ist und der Boden, der als Kaverne (9) dienenden Ausnehmung (4) im Trägerteil (3) eben ist, und dem Bestücken der Leiterplatte (12) mit Elektronikkomponenten (29).

7. Verfahren nach dem vorhergehenden Anspruch, mit weiterhin nachfolgenden Verfahrensschritten:
a) die Leiterplatte (12) wird in Heat-Sink-Technologie mit integriertem Blechprofil, das als Elektronikmodul (2) dient, ausgebildet,
b) die Leiterplatte (12) wird auf einen Druckkompensationsträger (16) geschichtet und mit diesem verpresst, und
c) das den Sensorchip (6) aufnehmende Trägerteil (3) wird mit der Leiterplatte (12) verklemmt, verklebt oder verschweißt.

## Claims

1. Hot-film air mass flowmeter for measuring the flow of air in the intake or charge-air tract of an internal combustion engine, having a plug housing (22), an electronics module (2) and having a carrier part (3) receiving a sensor chip (6), which is assigned to a channel (10) formed in the plug housing (22), through which at least a partial mass flow of a flowing medium flows, the sensor chip (6) projecting into the channel (10) through which the partial mass flow of the flowing medium flows, **characterized in that** the carrier part (3), in which the sensor chip (6) is integrated and located behind an approach flow edge (5), downstream in relation to an approach flow direction (11), is formed either as a component that can be fixed separately to the electronics module (2) or as a unit that is extruded onto the electronics module (2), wherein the sensor chip (6) is received in a recess (4) bounding the latter on all sides and serving as a cavern (9) on a side of the carrier part (3) around which there is flow, and the bottom of the recess (4) serving as a cavern (9) in the carrier part (3) is flat, wherein the carrier part (3) is produced from plastic.

2. Hot-film air mass flowmeter according to Claim 1, **characterized in that** the upper side of the sensor chip (6) forms a surface extending flatly with a side (7, 8) of the carrier part (3).

3. Hot-film air mass flowmeter according to Claim 1, **characterized in that** the electronics module (2) rests on a contact face (24) of the plug housing (22), which has an aperture (27) allocated to the bypass channel (10).

4. Hot-film air mass flowmeter according to Claim 1, **characterized in that** in the electronics module (2), formed as a U-shaped profile, a printed circuit board (12) is received so as to be pinned or bonded thereto.

5. Hot-film air mass flowmeter according to Claim 1, **characterized in that** the sensor chip (6) is fixed within the recess (4) by adhesive lugs (15).

6. Method for producing an electronics module (2) for a hot-film air mass flowmeter for measuring the flow of air in the intake or charge-air tract of an internal combustion engine, having a printed circuit board (12) and a carrier part (3), which receives a sensor chip (6) for measuring the flow of a medium flowing in a channel (11), having the following method steps:
a) punching out a sheet metal part (2) serving as electronics module (2),
b) producing conductor tracks on the printed circuit board (12),
c) fixing the printed circuit board (12) to the electronics module (2),
d) mounting the carrier part (3) which receives the sensor chip (6) and which is produced from plastic on the printed circuit board (12), either as a component fixed separately to the electronics module (2) or as an extruded-on unit,
e) fitting the carrier part (3) with the sensor chip (6), wherein the sensor chip (6) is received in a recess (4) bounding the latter on all sides and serving as a cavern (9) on a side of the carrier part (3) around which there is flow, and the bottom of the recess (4) serving as a cavern (9) in the carrier part (3) is flat, and fitting the printed circuit board (12) with electronic components (29).

7. Method according to the preceding claim, having the following further method steps:
a) the printed circuit board (12) is formed using heat-sink technology with integrated sheet metal profile, which serves as electronics module (2),
b) the printed circuit board (12) is laminated onto a pressure compensation carrier (16) and pressed with the latter, and
c) the carrier part (3) receiving the sensor chip (6) is clamped, bonded or welded to the printed circuit board (12).

## Revendications

1. Débitmètre massique d'air à film chaud servant à détecter le débit d'air dans la conduite d'air d'admission ou d'air de suralimentation d'un moteur combustion interne, comprenant un boîtier de connecteur (22), un module électronique (2) et un élément de support (3) recevant une puce de détection (6) associée à un canal (10) réalisé dans le boîtier de connecteur (22), qui est traversé au moins par un flux massique partiel d'un fluide en écoulement, dans lequel la puce de détection (6) fait saillie dans le canal (10) traversé par le flux massique partiel du fluide en écoulement, **caractérisé en ce que** l'élément de support (3), dans lequel la puce de détection (6) est intégrée à plat en aval par rapport à une direction d'afflux (11) à l'arrière d'un bord d'attaque (5), se présente soit sous la forme d'un composant pouvant être fixé séparément au module électronique (2), soit sous la forme d'une unité moulée sur le module électronique (2), dans lequel la puce de détection (6) est reçue dans celui-ci en étant délimitée sur tous ses côtés, sous la forme d'un évidement (4) jouant le rôle de cavité (9) du côté exposé à l'écoulement de l'élément de support (3), et le fond de l'évidement (4) jouant le rôle de cavité (9) est disposé à plat dans l'élément de support (3), dans lequel l'élément de support (3) est constitué de matière plastique.

2. Débitmètre massique d'air à film chaud selon la revendication 1, **caractérisé en ce que** la face supérieure de la puce de détection (6) forme une surface longitudinale avec un côté (7, 8) de l'élément de support (3).

3. Débitmètre massique d'air à film chaud selon la revendication 1, **caractérisé en ce que** le module électronique (2) repose sur une surface d'appui (24) du boîtier de connecteur (22), qui présente une traversée (27) tournée vers le canal de dérivation (10).

4. Débitmètre massique d'air à film chaud selon la revendication 1, **caractérisé en ce qu'**une carte de circuit imprimé (12) est reçue en étant chevillée ou collée dans le module électronique (2) réalisé sous la forme d'un profilé en U.

5. Débitmètre massique d'air à film chaud selon la revendication 1, **caractérisé en ce que** la puce de détection (6) est fixée à l'intérieur de l'évidement (4) par des points d'adhésif (15).

6. Procédé de fabrication d'un module électronique (2) destiné à un débitmètre massique d'air à film chaud servant à détecter le débit d'air dans la conduite d'air d'admission ou d'air de suralimentation d'un moteur combustion interne, comportant une carte de circuit imprimé (12) et un élément de support (3) recevant une puce de détection (6) servant à détecter l'écoulement un fluide s'écoulant dans un canal (11), comportant les étapes consistant à :
a) estamper une pièce de tôle (2) sous la forme d'un module électronique (2),
b) créer des pistes conductrices sur la carte de circuit imprimé (12),
c) fixer la carte de circuit imprimé (12) sur le module électronique (2),
d) monter l'élément de support (3), constitué de matière plastique et recevant la puce de détection (6), sur la carte de circuit imprimé (12) soit sous la forme d'un composant fixé séparément au module électronique (2), soit sous la forme d'une unité moulée,
e) équiper l'élément de support (3) de la puce de détection (6), dans lequel la puce de détection (6) est reçue dans celui-ci en étant délimitée sur tous ses côtés, sous la forme d'un évidement (4) jouant le rôle de cavité (9), d'un côté de l'élément de support (3) exposé à l'écoulement, et le fond de l'évidement (4) jouant le rôle de cavité (9) est disposé à plat dans l'élément de support (3), et équiper la carte de circuit imprimé (12) de composants électroniques (29).

7. Procédé selon la revendication précédente, comportant les étapes supplémentaires consistant à :
a) réaliser la carte de circuit imprimé (12) par une technologie de puits thermique présentant un profil de tôle intégrée jouant le rôle de module électronique (2),
b) déposer la carte de circuit imprimé (12) sur un support de compensation de pression (16) et la comprimer avec celui-ci, et
c) serrer, coller ou souder l'élément de support (3) recevant la puce de détection (6) à la carte de circuit imprimé (12).
